# EUROPEAN PATENT APPLICATION

(11) **EP 2 731 018 A2**
(43) Date of publication of application: **14.05.2014**
(21) Application number: 13192211.4
(22) Date of filing: 08.11.2013
(51) Int. Cl.: G06F 17/27, G06F 3/0488

(54) **Method of providing predictive text**

(30) Priority: 09.11.2012 US 201213673823
(71) Applicant: BlackBerry Limited, Waterloo, ON N2K 0A7 (CA)
(72) Inventor: White, Thaddeus Clark, Los Altos, CA California 94041 (US); Fenton, Michael Ryan, Toronto, Ontario M4P 3A2 (CA); Mak, Genevieve Elizabeth, Toronto, Ontario M4P 3A2 (CA); Korodi, Gergely Ferenc, Waterloo, Ontario N2V 2A4 (CA)
(74) Representative: Moore, Barry

(57) **Abstract**

A method comprises displaying, by an electronic device, a first string corresponding to a received input sequence, determining whether the first string comprises a first part of a complete storage address following a predetermined address convention, and responsive to the determining, displaying a second string associated with the first string and following the predetermined address convention. The second string is a second part of the complete storage address, and the complete storage address further comprises a third part following the second part.

## Description

### TECHNOLOGY FIELD

The present disclosure generally relates to electronic device technologies and, more particularly, to the methods, electronic devices, and storage devices for providing predictive text.

### BACKGROUND

Increasingly, electronic devices, such as computers, netbooks, cellular phones, smart phones, personal digital assistants, or tablets, have touch screens that allow users to input characters into an application, such as a browser, a word processing application, or an email application. Character input on touch screens can be a cumbersome task due to, for example, a small touch screen area. For example, for text entry, the touch screen is typically divided into two areas, a first portion for displaying an interactive virtual keyboard having a set of selectable keys and a second portion for displaying selected input associated with the keys.

Predictive text input solutions have been introduced for assisting with input on an electronic device. These solutions include predicting a character sequence, such as a word, a user may wish to enter after, for example, the user inputs one or more characters of the sequence, and offering to the user one or more suggestions (predictions) for one or more additional characters to complete the input.

However, a need for an improved method of providing predictive text exists.

### BRIEF DESCRIPTION OF THE DRAWINGS

The accompanying drawings, which are incorporated in and constitute a part of this specification, illustrate several examples of the disclosure and together with the description, serve to explain the principles of the disclosure.

FIGs. 1(a) and 1(b) schematically show an electronic device 100 consistent with the present disclosure.

FIG. 2 is a flow chart showing a method for entering text, consistent with the present disclosure.

FIGs. 3(a)-3(f) schematically illustrate an example of providing predictive text consistent with the present disclosure.

FIG. 4 is a flow chart showing a method for entering text, consistent with the present disclosure.

### DETAILED DESCRIPTION

In accordance with the present disclosure, a method comprises displaying, by an electronic device, a first string corresponding to a received input sequence, determining whether the first string comprises a first part of a complete storage address following a predetermined address convention, and responsive to the determining, displaying a second string associated with the first string and following the predetermined address convention. The second string is a second part of the complete storage address, and the complete storage address further comprises a third part following the second part.

Also in accordance with the present disclosure, a method for entering data in an electronic device is provided. The method comprises receiving an input sequence, outputting a string corresponding to the input sequence, determining whether the input sequence matches a format associated with storage addresses for documents in accordance with a predetermined address convention, and responsive to the determination, outputting an additional string associated with the input sequence based on a prediction that the additional string is likely to be at least a portion of a complete storage address.

Also in accordance with the present disclosure, a method for entering uniform resource locators (URLs) in an electronic device is provided. According to this method, the potential entry of a URL is detected based on, for example, input in a location or field associated with the entry of URLs or input of one or more characters typically associated with the entry of URLs (e.g., string appearing to comply with a URL standard format like http://www.rim.com/page.html). Responsive to this detection, the device generates a candidate set, for example, one or more predictions, for output. The predictions may be tokens, or portions, of a complete URL as opposed to a complete URL. The tokens may be set using the URL standard format. Selection of one of the predictions may be made by a further process or in response to further user input. In this implementation, " www.", "rim.", and "com/" are examples of tokens whereas "http://www.rim.com/page.html" is an example of a complete URL. This disclosure does not apply solely to storage address identifiers in the form of a "URL," other storage identifiers with portions that can be tokenized may also be used.

Also in accordance with the present disclosure, an electronic device is provided. The electronic device is configured to perform methods consistent with the present disclosure.

Also in accordance with the present disclosure, a computer-readable storage device is provided. The computer-readable storage device has computer-readable code executable by at least one processor of a portable electronic device to perform methods consistent with the present disclosure.

Features and advantages consistent with the present disclosure will be set forth in part in the description which follows, and in part will be obvious from the description, or may be learned by practice of the disclosure. Such features and advantages will be realized and attained by means of the elements and combinations particularly pointed out in the appended claims.

Reference will now be made in detail to examples of the present disclosure, which are illustrated in the accompanying drawings. Wherever possible, the same reference numbers will be used throughout the drawings to refer to the same or like parts.

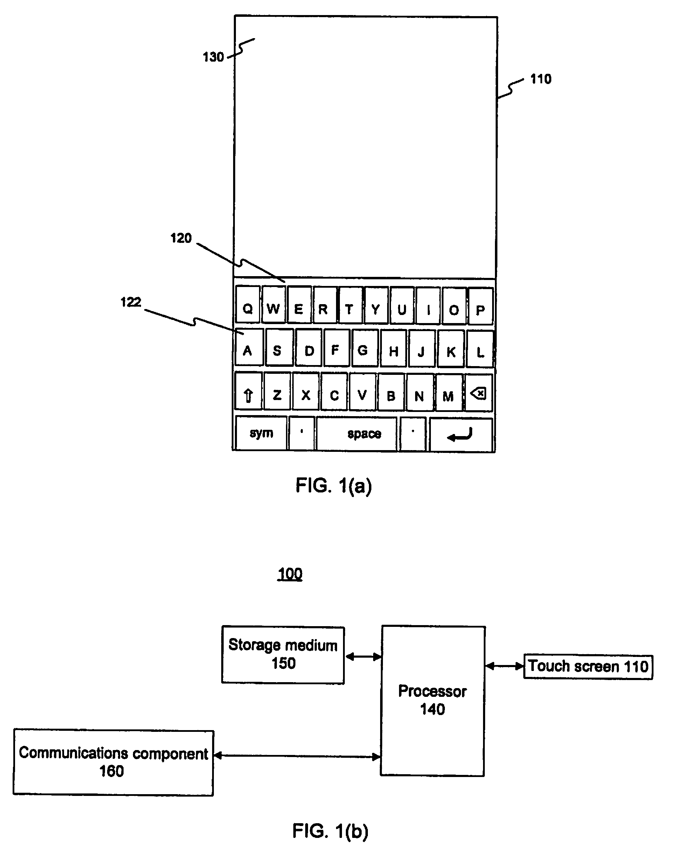

FIGs. 1(a) and 1(b) schematically show an electronic device 100 consistent with the present disclosure. The electronic device 100 may be, for example, a handheld device, a multiple-mode communication device configured for both data and voice communication, a smartphone, a mobile telephone, a netbook, a gaming console, a tablet, or a personal digital assistant (PDA) enabled for wireless communication.

FIG. 1(a) is a front view of the electronic device 100. As shown in FIG. 1(a), the electronic device 100 includes a touch screen 110. The touch screen 110 may be, for example, a liquid crystal display (LCD). A virtual keyboard may be activated to be displayed on the touch screen 110 for a user to input text. As shown in FIG. 1(a), a virtual keyboard 120 having a plurality of virtual keys 122 with associated characters has been activated and displayed on the touch screen 110. The touch screen 110 also includes a text-display area 130 to display the text input in response to selection of virtual keys 122 of the virtual keyboard 120.

FIG. 1(b) is a block diagram which schematically shows the components of the electronic device 100. As shown in FIG. 1(b), the electronic device 100 comprises a processor 140, which controls the operation of the electronic device 100. The processor 140 may be, for example, a single microprocessor, multiple microprocessors, field programmable gate arrays (FPGAs), digital signal processors (DSPs) capable of executing particular sets of instructions, or any circuit capable of electrically coupling subsystems of the electronic device 100.

The electronic device 100 further comprises a touch screen 110, which is also shown in FIG. 1(a) and described above. The processor 140 may control the content displayed on the touch screen 110.

The electronic device 100 also comprises a computer-readable storage device 150. The computer-readable storage device 150 may be a non-transitory computer-readable storage medium, such as, for example, a random access memory (RAM), a read only memory (ROM), a flash memory, or a hard disk. The storage device 150 stores computer-readable code executable by the processor 140 to perform various functions of the electronic device 100, including, for example, methods consistent with the present disclosure.

The electronic device 100 also comprises a communication component 160 for communicating with an external network, which may be, for example, a local area network, a wide area network, or a wireless access point, and may ultimately communicate with the Internet.

FIG. 1(b) only shows some components of the electronic device 100. The electronic device 100 may comprise other components, such as, for example, a physical keyboard, speaker, I/O interfaces, sensors, and battery, which are not shown in FIG. 1(b).

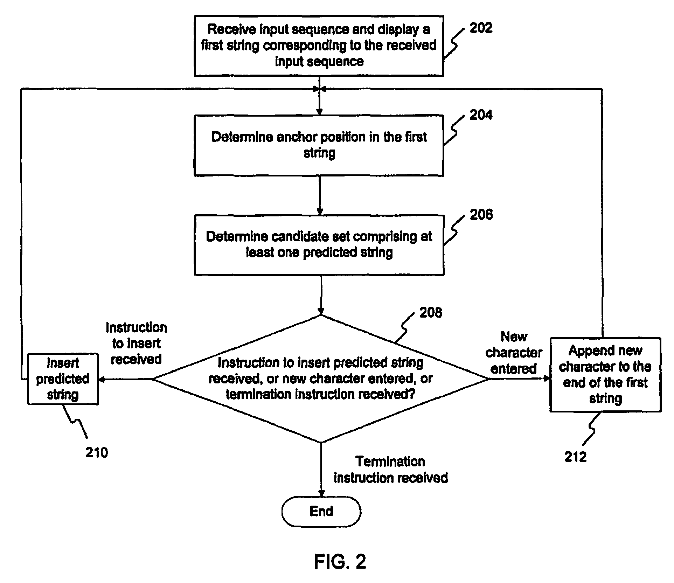

FIG. 2 is a flow chart showing a process 200 for entering text, for example, a storage address for data, such as a uniform resource locator (URL), in the text-display area 130. As described below, in methods consistent with the present disclosure, a storage address may be tokenized into multiple parts. The methods consistent with the present disclosure facilitate prediction of each part or token, rather than a complete storage address based on, for example, historical entries.

As shown in FIG. 2, at 202, the electronic device 100 receives an input sequence comprising at least one character, which may be entered by a user actuating select virtual keys 122 of the virtual keyboard 120. The electronic device 100 displays a first string corresponding to the received input sequence on the touch screen 110, for example, in the text-display area 130. Consistent with present disclosure, a character may be, for example, a number, a letter, a punctuation, or any symbol that may be entered using the virtual keyboard 120. Consistent with the present disclosure, the first string may comprise characters p₀, p₁, ..., p_{N-1} entered in that order, where N is a natural number. The first string may comprise a first part of a complete storage address for documents or data following a predetermined address convention, such as a beginning part of the complete storage address. In some examples, the first string may comprise a part of a URL.

At 204, an anchor position in the first string is determined for inserting a second string associated with the first string and following the predetermined address convention. The second string is predicted using methods consistent with present disclosure. The anchor position has an index k, where k is a non-negative integer and 0 ≤ k ≤ N. Before inserting the second string, the character of the first string at the anchor position, if any, and any characters of the first string after the anchor position, if any, may be deleted. Consistent with the present disclosure, k = 0 means that the anchor position is at the beginning of the first string. That is, the second string can be inserted at the beginning of the first string, and equivalently replaces the first string. On the other hand, k = N means that the anchor position is at the end of the first string. That is, the second string can be inserted at the end of the first string, i.e., inserted after character p_{N}. If N ≥ 2 and 0 < k < N, character pₖ and character(s) after pₖ, if any, will be deleted, and the predicted string can be inserted after characters pₖ₋₁.

At 206, a candidate set S comprising at least one predicted string is determined based on, for example, the first string. Determination of the candidate set S may also be subject to the anchor position. The second string may be an example of the predicted strings Sⱼ in the candidate set S. Consistent with the present disclosure, the candidate set S may comprise M predicted strings: S₁, ..., S_{M}, where M is a natural number. Each string Sⱼ (1 ≤ j ≤ M) may comprise nⱼ characters: S_{k,0}, ..., S_{k,nj-1}. The predicted string Sⱼ may be displayed at selected locations on the virtual keyboard 120. In some examples, each predicted string Sⱼ is a second part of a complete storage address, such as a beginning part or a middle part of the complete storage address. In some examples, the complete storage address may be a URL and each predicted string Sⱼ may have a double-slash sign ("//"), a slash sign ("/"), or a period symbol (".") only at the end of the predicted string Sⱼ. In some examples, the second part of the complete storage address may not constitute a final part of the complete storage address. That is, the complete storage address may further comprise a third part following the second part.

In some examples, for each predicted string Sⱼ, a virtual key Rⱼ on the virtual keyboard 120 may be assigned. For example, the virtual key Rⱼ assigned to a predicted string Sⱼ may be a key with which one of the characters, such as the first character or the second character, of the predicted string Sⱼ is associated. As a particular example, if the first characters of two predicted strings Sⱼ are different from each other, the virtual keys Rⱼ assigned to the two predicted strings Sⱼ may be keys associated with the first characters of the two predicted strings Sⱼ, respectively. If the first characters of the two predicted strings are the same as each other but the second characters of the two predicted strings Sⱼ are different from each other, the virtual keys Rⱼ assigned to the two predicted strings Sⱼ may be keys associated with the second characters of the the two predicted strings Sⱼ, respectively.

Consistent with the present disclosure, each predicted strings Sⱼ may be displayed on or near the virtual key Rⱼ assigned to the predicted string Sⱼ. For example, in some examples, each predicted string Sⱼ may be displayed above the virtual key Rⱼ assigned to the predicted string Sⱼ. In some examples, the predicted string Sⱼ may be displayed at other locations near the corresponding assigned virtual keys Rⱼ, such as to the left or the right of the corresponding assigned virtual keys Rⱼ, to the upper left, upper right, lower left, or lower right of the corresponding assigned virtual keys Rⱼ, or below the corresponding assigned virtual keys Rⱼ. In some examples, the predicted string Sⱼ may partially overlap the corresponding assigned virtual keys Rⱼ.

At 208, determination is made as to whether an instruction to insert a predicted string Sⱼ is received, a new character R is entered, or a termination instruction is received. In some examples, the instruction to insert the predicted string Sⱼ may be determined to have been received when a swipe gesture performed on the corresponding assigned virtual key Rⱼ is detected. The swipe gesture may be performed by the user touching the touch screen 110 at the assigned virtual key Rⱼ, quickly moving toward a certain direction, such as up, down, left, or right, while maintaining the contact, and releasing the contact with the touch screen 110 after a certain amount of movement. In some examples, the instruction to insert the predicted string Sⱼ may be determined to have been received when a click gesture or a swipe gesture performed on the displayed predicted string Sⱼ is detected.

In some examples, entering another character R may be performed by the user pressing or clicking on the virtual key corresponding to the character R, regardless of whether that character R has been assigned to a predicted string. In some examples, termination instruction may be determined to have been received when, for example, the user presses or clicks the enter key, presses or clicks the space key, or taps on another place of the touch screen.

If the determination result at 208 is that an instruction to insert the predicted string Sⱼ is received, the process continues at 210, at which the character of the first string at the anchor position, if any, and any characters of the first string after the anchor position, if any, are deleted, and the predicted string Sⱼ is inserted at the anchor position. The string displayed on the touch screen 110 becomes p₀, ..., pₖ₋₁, S_{j,0}, ..., S_{j,nj-1}. In addition, N is set to k + nⱼ, and the process continues at 204.

If the determination result at 208 is that a new character R is entered, the process continues at 212, at which the new character R is appended to the end of the first string. The string displayed on the touch screen 110 becomes p₀, ..., p_{N-1}, R. Further, N is set to N + 1, and the process continues at 204. If the determination result at 208 is that a termination instruction is received, the process ends.

In some examples, k may be preset to equal N for any first string; that is, at 204, the anchor position is determined to be at the end of the first string regardless what the first string is. In these examples, the candidate set S determined at 206 may comprise at least one predicted string that is a URL prefix or a top-level domain (TLD). The URL prefix may be a URL prefix, such as "www." or "news.". The TLD may be a generic TLD, such as "com/", "net/", "biz/", or "org/", or a country-code TLD, such as "ca/" or "cn/".

In some examples, at 204, the anchor position is determined based on whether the first string contains at least one slash sign ("/") or at least one period symbol ("."), and consequently, the candidate set S determined at 206 may depend on the determination results at 204.

Consistent with the present disclosure, if the first string does not contain a slash sign or period symbol, the anchor position may be determined to be at the beginning of the first string, i.e., k = 0. In this situation, the candidate set S may be determined to include at least one predicted string that complies with a URL protocol, which may contain a double-slash sign ("//", a double-slash sign may be considered as containing two characters, i.e., two slash signs) and be terminated by that double-slash sign. Examples of the URL protocol may include "http://", "https://", "ftp://", or "ftps://". As known to one skilled in the art, when entering a URL, the URL protocol may be omitted. Therefore, if the anchor position is determined to be at the beginning of the first string, the candidate set S may also include at least one predicted string that is a URL prefix, which may contain only one period symbol (".") and be terminated by that one period symbol, such as "www." or "news.".

On the other hand, if the first string contains a slash sign or period symbol, or the first string contains both slash sign and period symbol, the anchor position may be determined to be after the last slash sign or the last period symbol, whichever comes later. For example, for a first string "http://w", the sixth character p₅ and the seventh character p₆ are both slash signs. No slash sign or period symbol exists after the seventh character p₆. That is, the seventh character p₆ is the last slash sign or period symbol. Therefore, the anchor position may be determined to be after the seventh character p₆, i.e., k = 7. For another example, for a first string "http://www.ri", the sixth character p₅ and the seventh character p₆ are both slash signs, and the eleventh character p₁₀ is a period symbol. No slash sign or period symbol exists after the eleventh character p₁₀. That is, the eleventh character p₁₀ is the last slash sign or period symbol. Therefore, the anchor position may be determined to be after the eleventh character p₁₀, i.e., k = 11.

If the anchor position is determined to be after the last slash or period symbol, the candidate set S may be determined to include at least one predicted string that is a URL prefix or a TLD. In some examples, the URL prefix may contain only one period symbol and be terminated by that one period symbol. Similarly, the TLD may contain only one slash sign and be terminated by that slash sign.

Methods consistent with the present disclosure for determining the candidate set S based on the first string are described below. Consistent with the present disclosure, a set of strings, which may be referred to as a set W of words, may be determined based on a portion of the first string before the anchor position, i.e., the string p₀, p₁, ..., pₖ₋₁. The portion of the first string before the anchor position may be referred to as a context. More particularly, the set W of words may be identified from a dictionary based on the context, by selecting the words that are known to follow the context in valid URLs. In some examples, each word in the set W may have a historical usage, which may be expressed as a frequency. In some examples, the historical usages of the words may be determined according to statistical probability data about URL usage across the world. In some examples, the historical usages of the words may be determined according to localized statistical probability data, i.e., statistical data about URL usage in one country, such as Canada or the United States, or in one region, such as Ontario or California. In some examples, the historical usages of the words may be determined according to personalized statistical probability data, which is generated based on the historical URL usage by the user of the electronic device.

Consistent with the present disclosure, whether k = N, i.e., whether the anchor position is at the end of the first string, is determined. If no, a subset W' of the set W may be determined. In some examples, each word in the subset W' may begin with a prefix string that equals to a string comprising the character of the first string at the anchor position and any characters of the first string after the anchor position, if any. That is, the prefix string of each word in the subset W' may be the string pₖ, ..., p_{N-1}.

In some examples, the string comprising the character of the first string at the anchor position and any characters of the first string after the anchor position, if any, i.e., the string pₖ, ..., p_{N-1}, may be mapped to another string using an appropriate approximate string matching algorithm, such as the Minimum Edit Distance algorithm. In these examples, each word in the subset W' may begin with a prefix string that equals to the mapped string. Since the candidate set S is selected from the subset W', and the predicted string in the candidate set S, once selected by the user, will overwrite the string pₖ, ..., p_{N-1} (deleting the string pₖ, ..., p_{N-1} from the first string and inserting the mapped string at the anchor position), using a mapped string for determining the subset W' may effectively provide an error correction. In some examples, a threshold may be preset for the approximate string matching algorithm to limit an alignment cost. The threshold may determine the severity of the error correction, where higher threshold allows for more changes in the string pₖ, ..., p_{N-1} when performing the mapping. In some examples, the threshold may be fixed. In some examples, the threshold may be adaptive depending on the application in which the storage address is being input.

In some examples, the candidate set S may be selected based on the historical usage of the words in the subset W'. In some examples, the candidate set S may include those words that can be displayed on the virtual keyboard without text collision, and for which the sum of the historical usages (expressed as frequencies) is the highest.

Consistent with the present disclosure, if k = N, i.e., if the anchor position is at the end of the first string, the subset W' may be set to equal to the set W. That is, if the anchor position is at the end of the first string, the entire set W is used for selecting the candidate set S. In other examples, the entire set W may be used for selecting the candidate set S no matter where the anchor position is. Each word in the entire set W may have a historical usage, and the candidate set S may be selected based on the historical usages of the words in the set W.

In some examples described above, the context is used to identify the set W. However, in other examples, the set W is identified based not only on the context, but also on a related context. The relation between a context and a related context may be an equivalence relation. A context and the related context(s) of the context together may form a class of contexts. In these examples, the set W is identified taking into consideration the historical usages of the words when being associated with the context and the historical usages of the words when being associated with the related context.

In some examples, contexts in a class of contexts may have weights. The candidate set S may be selected from the set W based on string weights of the words calculated based on the historical usages of the words in the set W when being associated with the contexts and the weights of the contexts in the class. For example, if a context has one related context, where the word has a first historical usage when being associated with the context and has a second historical usage when being associated with the related context, the string weight of the word may be calculated by adding the first historical usage (expressed as frequency) of the word and the multiplication of the second historical usage (expressed as frequency) of the word and the weight of the related context. As a more particular example, the contexts "http://" and "http://www." may be related, where the context "http://" may have a weight of 0.5 and the context "http://www." may have a weight of 1.0. Assuming the word "rim." has a historical usage (expressed as frequency) of 80 when associated with the context "http://" and a historical usage (expressed as frequency) of 120 when associated with the context "http://www.", thus the string weight of the word "rim." when the context in the first string is "http://" may be calculated as 80 + 120 x 1.0 = 200. On the other hand, when the context in the first string is "http://www.", the string weight of the word "rim." may be calculated as 120 + 80 x 0.5 = 160. A word associated with the context may not necessarily be associated with the related context. In such a situation, the historical usage (expressed as frequency) of that word when being associated with the related context may be taken as 0.

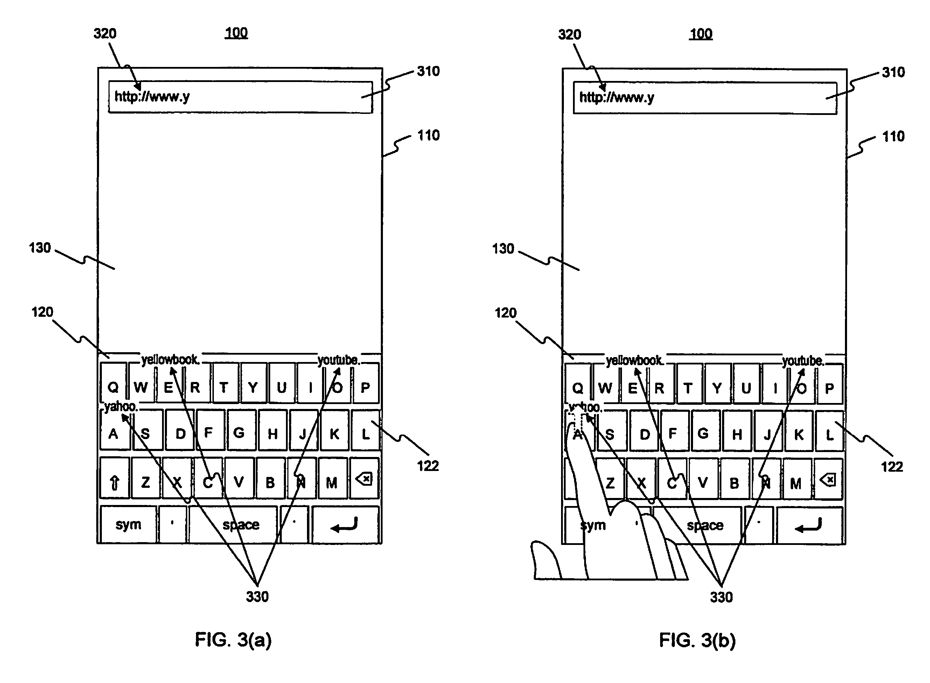

FIGs. 3(a)-3(f) illustrate an example of providing predictive text consistent with the present disclosure, on an electronic device 100 shown in FIG. 1. In FIGs. 3(a)-3(f), the text-display area 130 includes an address field 310 for entering a URL. In some examples, the address field 310 may be an address field of an internet browser. As shown in FIG. 3(a), a first string 320, "http://www.y", has been displayed in the address field 310, responding to an input sequence entered by the user. The processor 140 of the electronic device 100 determines that the anchor position is after the period symbol. The processor 140 also determines a candidate set 330 and displays the candidate set 330 on the virtual keyboard 120. In the example shown in FIG. 3(a), the candidate set 330 includes predicted strings "yahoo.", "yellowbook.", and "youtube.", which are displayed above the virtual keys "A", "E", and "O", respectively.

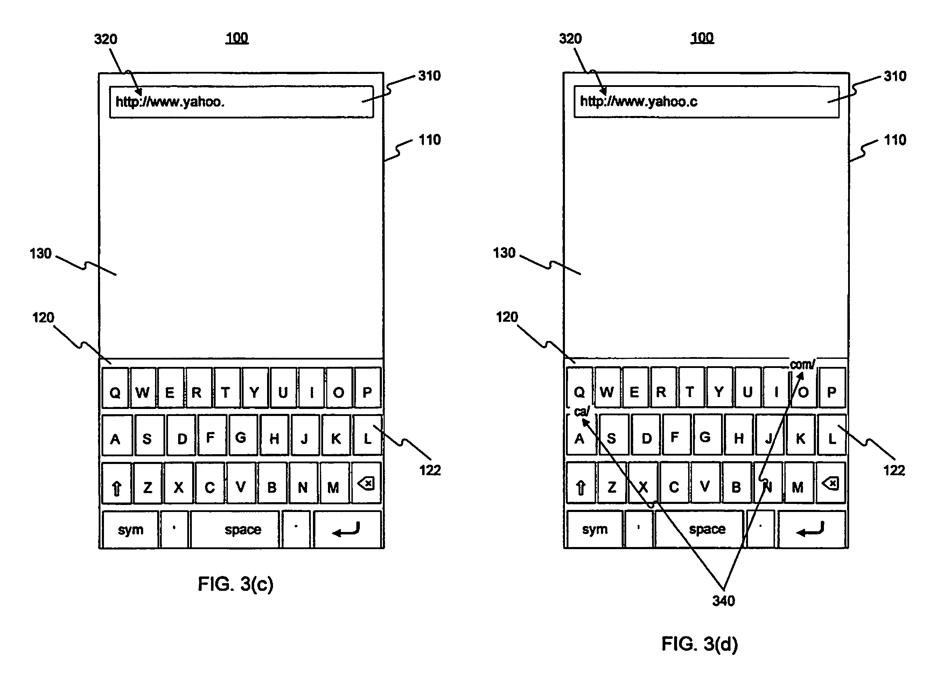

As shown in FIG. 3(b), the user performs a swipe gesture on the "A" key, as indicated by the dashed arrow. Responsive to detection of a swipe gesture, the processor 140 deletes the character "y" previously entered after the period symbol, and inserts the predicted string "yahoo." into the first string at the anchor position, i.e., after the period symbol (and thus equivalently replacing the character "y" by the predicted string "yahoo."), as shown in FIG. 3(c).

Referring to FIG. 3(d), the user further enters a character "c" by pressing the virtual key "C". Now, since the string displayed in the address field 310 contains two period symbols, the processor 140 determines that the anchor position is after the second, i.e., the last, period symbol. The processor 140 further determines a candidate set 340 and displays the candidate set 340 on the virtual keyboard 120. In the example shown in FIG. 3(d), the candidate set 340 includes predicted strings "ca/" and "com/", which are displayed above the virtual keys "A" and "O", respectively.

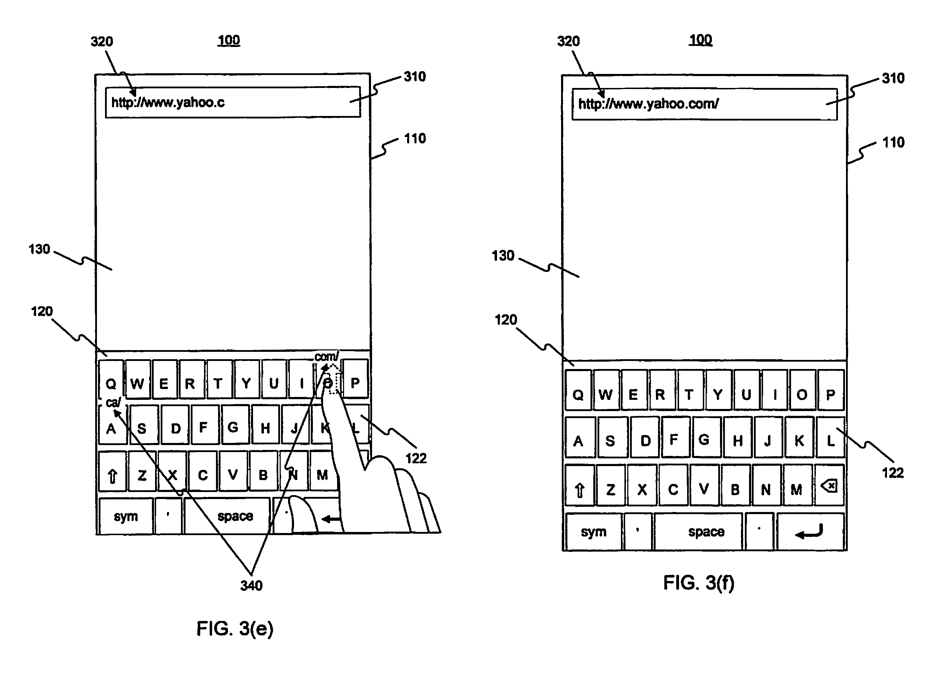

As shown in FIG. 3(e), the user performs a swipe gesture on the "O" key, as indicated by the dashed arrow. When detecting the swipe gesture, the processor 140 deletes the character "c" previously entered after the second period symbol, and inserts the predicted string "com/" into the displayed string at the anchor position, i.e., after the second period symbol (and thus equivalently replacing the character "c" by the predicted string "com/"), as shown in FIG. 3(f).

Consistent with the present disclosure, predictions may be continuously provided, without waiting for the user to enter a character to generate a prediction. For example, FIG. 3(c) shows the situation after the predicted string "yahoo." is selected and displayed in the address field 310 and FIG. 3(d) shows the situation after an additional character "c" is further entered by the user and predicted strings based on this entry are displayed. However, before the user enters the additional character "c", the electronic device 100 may have performed a prediction based on the string already in the address field 310, including the string previously input by the user, i.e., "http://www." and the predicted string selected by the user, i.e., "yahoo.". The candidate set determined by the electronic device 100 may also include other TLDs in addition to "com/" and "ca/", such as, for example, "de/" and "fr/", and the electronic device 100 may display such a candidate set for the user to select before the user enters the additional character "c".

The example described above with respect to FIGs. 3(a)-3(f) is related to entering a URL in an address field of a browser. The method consistent with the present disclosure can also be applied to enter URL's in a field other than the address field, such as an email body or a notepad. When the user is typing regular texts in a field other than the address field, a different algorithm or method for text predicting, formatting, or correcting may be used by the electronic device 100. For example, some automatic formatting algorithms may automatically add a space after a period symbol is entered by the user. However, when a portion of a storage address, such as a URL, has been entered, or a storage address, such as a URL, is to be entered, algorithms consistent with the present disclosure, i.e., an address specific language model, may be invoked, and the predicting, correcting, and formatting of the storage address may be performed according to the address specific language model consistent with the present disclosure. For example, the automatic formatting algorithm consistent with the present disclosure may not add a space after a period symbol, as unencoded spaces cannot be included in a URL.

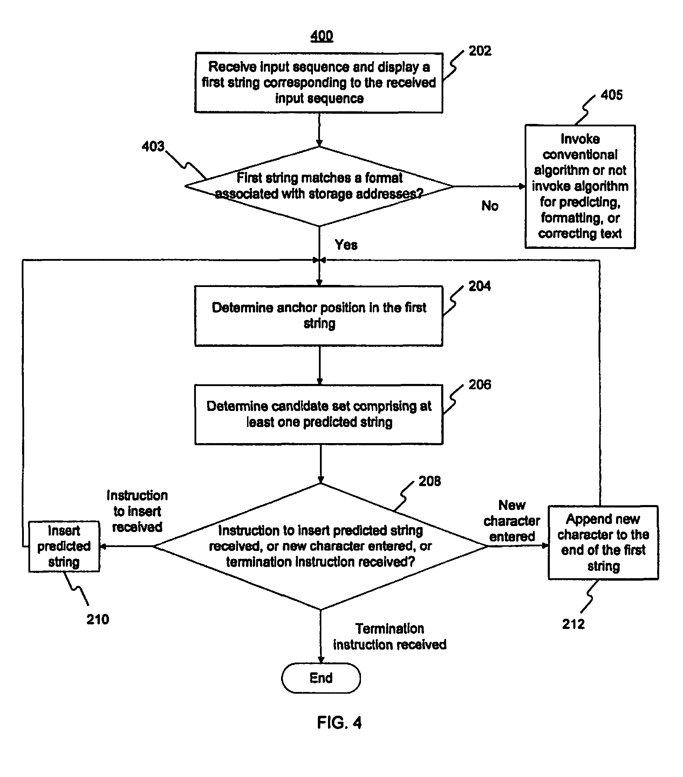

In some examples, when the electronic device 100 receives an input sequence and displays a first string corresponding to the received input sequence, the electronic device 100 determines whether the first string matches a format associated with storage addresses for documents in accordance with a predetermined address convention, for example, whether the first string comprises a first part of a complete storage address following the predetermined address convention, as shown in FIG. 4 at 403. If yes, an algorithm consistent with the present disclosure for predicting, formatting, or correcting storage addresses may be invoked. A second string associated with the first string and following the predetermined address convention is displayed on the touch screen 110.

On the other hand, if the first string does not match a format associated with storage addresses, a conventional algorithm for predicting, formatting, or correcting text in a field other than address field may be invoked, or no algorithm for predicting, formatting, or correcting text is invoked, as shown in FIG. 4 at 405.

In some disclosed examples, the prediction of strings is performed based on a first string corresponding to a received input sequence comprising at least one character. However, an input sequence is not necessary for invoking an algorithm consistent with the present disclosure for predicting a storage address. For example, in some examples, the electronic device 100 may determine that a storage address, such as a URL, is to be entered, although the electronic device 100 has not received an input sequence. The electronic device 100 may invoke an algorithm consistent with the present disclosure and determine a candidate set including at least one predicted string that is, for example, a URL protocol, which terminates with a double-slash sign ("//"), such as "http://" or "ftp://". The determination that a storage address is to be entered may be made when the electronic device 100 detects that inputting is about to start in a field for entering storage address, such as the address field 310 shown in FIGs. 3(a)-3(f). For example, the determination that a storage address is to be entered may be made when the electronic device 100 detects that the cursor has been moved into a field for entering storage address.

While the above description provides examples of one or more processes or apparatuses, other processes or apparatuses can be within the scope of the claims.

The foregoing description has been presented for purposes of illustration. The disclosure is not exhaustive and is not limited to the precise forms or examples disclosed. Modifications and adaptations of the examples will be apparent from consideration of the present disclosure and practice of the disclosed examples. For example, the described implementations include hardware and software, but systems and methods consistent with the present disclosure can be implemented as hardware alone.

Computer programs based on the written description and methods of the present disclosure are within the skill of a software developer. The various programs or program modules can be created using a variety of programming techniques. For example, program sections or program modules can be designed in or by means of Java, C, C++, assembly language, or any such programming languages. One or more of such software sections or modules can be integrated into a computer system or existing communications software.

Moreover, while illustrative examples have been described herein, the scope includes any and all examples having equivalent elements, modifications, omissions, combinations (e.g., of aspects across various examples), adaptations and/or alterations based on the present disclosure. The elements in the claims are to be interpreted broadly based on the language employed in the claims and not limited to examples described in the present specification or during the prosecution of the application, which examples are to be construed as non-exclusive. Therefore, the disclosure and examples are intended to be considered as exemplary only, with a true scope and spirit being indicated by the following claims and the full scope of equivalents of the claims.

## Claims

1. A method comprising:
displaying, by an electronic device, a first string corresponding to a received input sequence;
determining whether the first string comprises a first part of a complete storage address following a predetermined address convention; and
responsive to the determining, displaying a second string associated with the first string and following the predetermined address convention;
wherein the second string is a second part of the complete storage address, and
wherein the complete storage address further comprises a third part following the second part.

2. The method of claim 1, further comprising determining an anchor position in the first string for inserting the second string.

3. The method of claim 1, further comprising receiving an instruction to insert the second string at an anchor position.

4. The method of claim 1, further comprising, before the second string is inserted, deleting a first character of the first string at an anchor position and deleting any characters of the first string after the anchor position.

5. The method of claim 1, further comprising displaying the second string at a location on or near a virtual key of a virtual keyboard that is associated with a character of the second string.

6. The method of claim 1, further comprising inserting the second string in response to detecting a swipe gesture performed on a virtual key where the second string is displayed.

7. The method of claim 1, further comprising determining an anchor position at an end of the first string, and wherein displaying a second string comprises displaying a second string that is a uniform resource locator prefix or a top-level domain.

8. The method of claim 1, wherein displaying a first string comprises displaying a first string that does not comprise a slash sign or a period symbol, and further comprising determining an anchor position at a beginning of the first string.

9. The method of claim 1, wherein displaying a second string comprises displaying a second string that complies with a uniform resource locator protocol, or
wherein displaying a second string comprises determining a set of strings beginning with the first string and selecting the second string from the set of strings.

10. The method of claim 1 wherein displaying a second string comprises determining a set of strings beginning with the first string and selecting the second string from the set of strings and wherein each string in the set of strings has a historical usage, and selecting the second string from the set of strings comprises selecting the second string from the set of strings based on the historical usages of the strings.

11. The method of claim 1, wherein displaying a first string comprises displaying a first string that comprises at least one slash sign or at least one period symbol, and further comprising determining an anchor position after a last slash sign or period symbol in the first string.

12. The method of claim 1, wherein displaying a second string comprises at least one of:
displaying a second string that is a uniform resource locator prefix or a top-level domain; determining a set of strings based on a portion of the first string before an anchor position of the first string, and selecting the second string from the set of strings;
determining a subset of a set of strings, wherein each string in the subset begins with a string comprising a first character of the first string at an anchor position in the first string and any characters of the first string after the anchor position, and
wherein the second string is selected from the subset;
includes mapping a string comprising a first character of the first string at an anchor position in the first string and any characters of the first string after the anchor position to a mapped string, and determining a subset of a set of strings,
wherein each string in the subset begins with the mapped string, and wherein the second string is selected from the subset;
includes displaying a second string having a double-slash sign, a slash sign, or a period symbol only at an end of the second string

13. The method of claim 1, further comprising calculating string weights for strings of a set of strings based on a first historical usage of the strings when being associated with a portion of the first string, a second historical usage of the strings when being associated with a related context, and a weight of the related context, and wherein the second string is selected from the set of strings based on the string weights of the set of strings.

14. An electronic device configured to perform the method of any preceding claim.

15. A computer-readable storage device having computer-readable code executable by at least one processor of a portable electronic device to perform the method of any one of claims 1 to 13.
